# EUROPEAN PATENT APPLICATION

(11) **EP 1 610 206 A2**
(43) Date of publication of application: **28.12.2005**
(21) Application number: 05253481.5
(22) Date of filing: 07.06.2005
(51) Int. Cl.: G06F 1/26, G05F 1/46

(54) **System and method for performing power sequencing**

(30) Priority: 22.06.2004 KR 2004046616
(71) Applicant: SAMSUNG ELECTRONICS CO., LTD., Suwon-si, Gyeonggi-do (KR)
(72) Inventor: Kim, Hyoung-su, Gunpo-si, Gyeonggi-do (KR)
(74) Representative: Davies, Robert Ean

(57) **Abstract**

Disclosed is a system and method for performing power sequencing. The system includes a main power supply unit (310) for receiving a power from an external power source, a power sequencing drive unit (380) for receiving an output voltage (POWER E) of the main power supply and outputting a preset first voltage (POWER D), a power control unit (370) for receiving the first voltage and outputting at least one different device drive voltage (POWER D-1), and a device for receiving the first voltage and the device drive voltage and operating by the received voltages. The application of the first voltage and the device drive voltage can be selectively sequenced.

## Description

The present invention relates generally to the power sequencing, and more particularly, but not exclusively, to a system and method for supplying stable power to devices that require a power sequence.

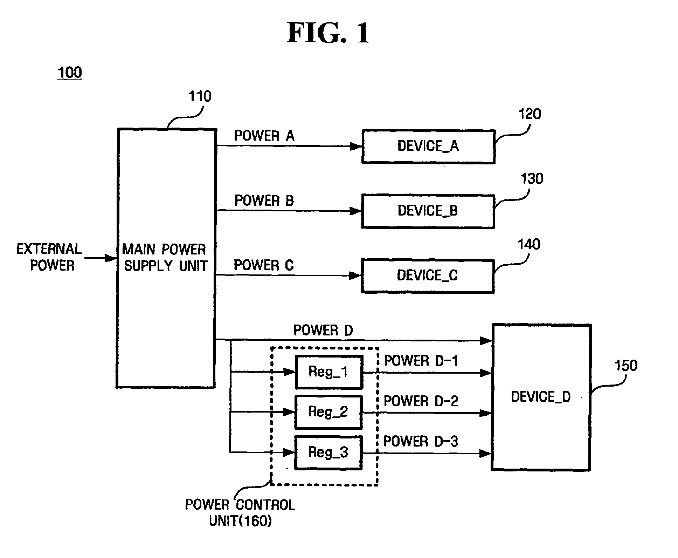

Generally, most systems are constructed to receive a specified power for their operation. In some cases, a single source power signal, which is supplied to a system, is divided into several kinds of power signals, and the divided power signals are provided to various kinds of devices that constitute the system. This is because power signals having different power levels are required for the respective devices. Power signal and power signals shall hereinafter be referred to as power and powers, respectively. Figure 1 shows a conventional system 100 for supplying powers to various devices that constitute the system 100.

If it is assumed that the system 100 comprises a main power supply unit 110 and four devices 120, 130, 140 and 150, the respective devices 120, 130, 140 and 150 receive operating powers having different levels from the main power supply unit 110. This function of receiving a single external power supply as an input and outputting powers having various levels can be implemented by a Switching Mode Power Supply (SMPS). Meanwhile, a device_D 150, which is, for example, an integrated circuit (IC) chip set such as a Central Processing Unit (CPU), may require powers having various levels rather than a single power. In this case, the device_D 150 receives a power D from the main power supply unit 110 as its main power and other necessary powers from a power control unit 160. The power control unit 160, as shown in Figure 1, may comprise a plurality of regulator ICs Reg_1, Reg_2 and Reg_3.

Meanwhile, ICs, which require powers having different levels such as the device_D 150, have a specified power sequence for the normal operation of the chips, in addition to a protection circuit for internally preventing an Electrostatic Discharge (ESD). In this case, the power sequence means the order or rule of power supply for a normal and stable operation of a device that operates with at least two powers having different levels without malfunctioning. If the powers are not supplied to match such a power sequence, the ICs may perform an unexpected operation, resulting in deterioration of product reliability.

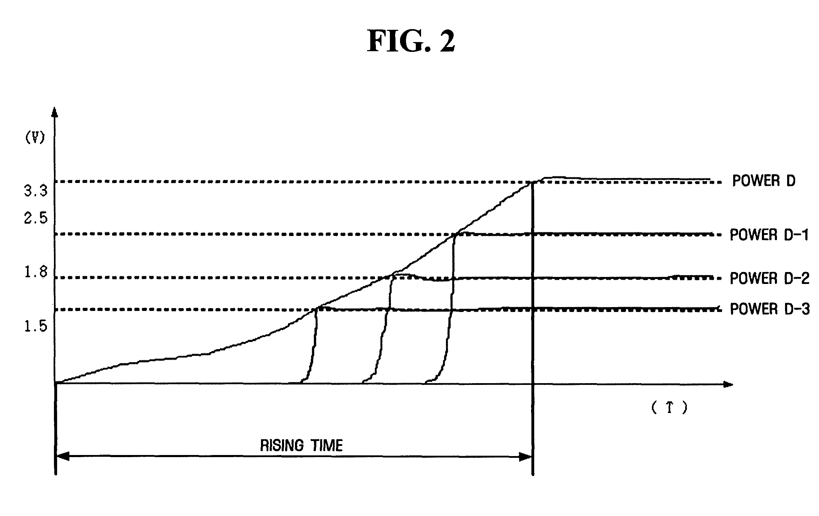

For example, it is assumed that in the event that a power D is supplied to the device_D 150 by the conventional construction as illustrated in Figure 1, levels of the power D, that is, power D-1, power D-2 and power D-3, are 3.3V, 2.5V, 1.8V and 1.5V, respectively. Figure 2 is a graph showing time periods required for applying the powers to these device_D 150.

Specifically, the regulator ICs operate in the order of their operating voltage during a rising time when the power D is applied to the device_D 150 to supply the powers to the device_D 150. Accordingly, the power D-3 is first applied to the device_D 150, and then the power D-2, power D-1 and power D are applied to the device_D 150 in order.

In this case, if a power sequence for most rapidly applying the power D to the device_D 150 is required in order for the device_D 150 to perform a normal operation, the device_D 150 may not perform a normal operation due to the power sequence as shown in Figure 2, and this may cause an unexpected result.

Accordingly, if the device, which operates with powers having different levels, requires a specified power sequence for performing a stable operation, it is necessary to design a circuit for supplying a stable power so as to satisfy the power sequence.

Accordingly, embodiments of the present invention aim to address the above-mentioned and other problems occurring in the prior art. Advantageously, embodiments of the present invention provide a method for supplying a power according to a desired power sequence by shortening a rising time of the power supplied to a device that requires a power sequence condition and adjusting a time for the power supply to the device.

Additional advantages, objects, and features of the invention will be set forth in the description which follows and will be apparent to those having ordinary skill in the art.

According to a first aspect of the present invention, there is provided a system for performing a power sequencing, comprising a main power supply unit for receiving a power from an external power source; a power sequencing drive unit for receiving an output voltage of the main power supply and outputting a first preset voltage; a power control unit for receiving the first voltage and outputting at least one different device drive voltage; and a device for receiving the first voltage and the device drive voltage and operating by the received voltages.

In another aspect of the present invention, there is provided a method for performing a power sequencing, comprising the steps of (a) receiving a power from an external power source; (b) converting the power into a first voltage for operating devices that constitute a system; (c) converting the first voltage into at least one device drive voltage; and (d) outputting the first voltage and the device drive voltage to the devices.

Other preferred features will be apparent from the appended claims and the following description.

For a better understanding of the invention, and to show how embodiments of the same may be carried into effect, reference will now be made, by way of example, to the accompanying diagrammatic drawings in which:
Figure 1 is a block diagram illustrating a conventional construction for supplying powers to devices;
Figure 2 is a graph illustrating time periods required for applying powers to the device according to the conventional construction of Figure 1;
Figure 3 is a block diagram illustrating the construction of a system for performing a power sequencing according to an embodiment of the present invention;
Figure 4 is a graph illustrating time periods required for applying powers to the device of Figure 3 according to an embodiment of the present invention;
Figure 5 is a block diagram illustrating the construction of a system for performing a power sequencing according to another embodiment of the present invention;
Figure 6 is a graph illustrating time periods required for applying powers to the device of Figure 5 according to another embodiment of the present invention;
Figure 7 is a block diagram illustrating the construction of a system for performing a power sequencing according to still another embodiment of the present invention;
Figure 8 is a graph illustrating time periods required for applying powers to the device of Figure 7 according to still another embodiment of the present invention; and
Figure 9 is a flowchart illustrating a method for performing a power sequencing according to an embodiment of the present invention.

Hereinafter, preferred embodiments of the present invention will be described with reference to the accompanying drawings. The matters defined in the description, such as detailed construction and elements, are nothing but specific details provided to assist in a comprehensive understanding of the invention. Thus, it will be apparent that the present invention can be carried out without such limitations. In the following description of the present invention, the same drawing reference numerals are used for the same elements among/across various figures.

The present invention is described hereinafter with reference to flowchart illustrations of methods according to embodiments of the invention. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatuses to produce a machine, such that the instructions, which execute via the processor of the computer or other programmable data processing apparatuses, create means for implementing the functions specified in the flowchart block or blocks.

These computer program instructions may also be stored in a computer usable or computer-readable memory that can direct a computer or other programmable data processing apparatuses to function in a particular manner, such that the instructions stored in the computer usable or computer-readable memory produce an article of manufacture including instruction means that implement the function specified in the flowchart block or blocks.

The computer program instructions may also be downloaded into a computer or other programmable data processing apparatuses, causing a series of operational steps to be performed on the computer or other programmable apparatuses to produce a computer implemented process such that the instructions that execute on the computer or other programmable apparatuses provide steps for implementing the functions specified in the flowchart block or blocks.

And each block of the flowchart illustrations may represent a module, segment, or portion of code, which comprises one or more executable instructions for implementing the specified logical function(s). It should also be noted that in some alternative implementations, the functions noted in the blocks may occur out of order. For example, two blocks shown in succession may in fact be executed almost concurrently or the blocks may sometimes be executed in the reverse order, depending upon the functionality involved.

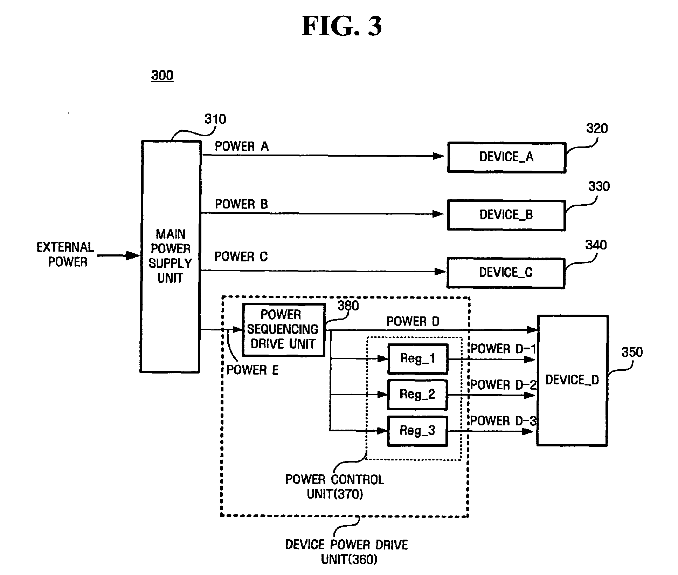

Figure 3 is a block diagram illustrating the construction of a system 300 for performing a power sequencing according to an embodiment of the present invention.

Referring to Figure 3, the system 300 comprises a main power supply unit 310, a plurality of devices 320, 330, 340 and 350, and a device power drive unit 360.

The main power supply unit 310 receives a single power from an external power source, and outputs powers (e.g., powers A, B, C and E) having different levels. The devices 320, 330, 340 and 350 receive the respective powers from the main power supply unit 310, and operate.

The device power drive unit 360 provides a power sequence for operating the devices that require powers having different levels using the power (e.g., power E) from the main power supply unit 310. In this case, the device power drive unit 360 comprises a power control unit 370 and a power sequencing drive unit 380. The power control unit 370 provides other powers except for the main power to the device. The power sequencing drive unit 380 receives power (e.g., power E) from the main power supply unit 310, supplies the main power to the device as indicated at power D, and supplies input powers to the power control unit 370. Meanwhile, the device 350 includes a physical hardware appliance or hardware element for performing a specified function, an IC chip set, etc.

As shown in Figure 3, the device_D 350, which requires powers having different levels, does not receive the power directly from the main power supply unit 310, but rather receives power from the device power drive unit 360 that performs the power sequence. Accordingly, the circuit construction of the device power drive unit 360 can be designed to satisfy the power sequence for the normal operation of the device_D 350.

If an external power for operating the system is applied to the system 300, the main power supply unit 310 supplies power to a device_A 320, a device_B 330 and a device_C 340. For example, the main power supply unit 310 supplies a power A, power B and power C directly to the devices 320, 330 and 340, respectively.

Meanwhile, it is assumed that the device_D 350, which operates by four powers having different levels (in this case, it is assumed that the order of their power level is determined as the application of power D before power D-1, which is applied before power D-2, which in turn is applied before power D-3), has a power sequence in which the power D having the largest level is applied to the device_D 350 earlier than other powers (i.e., power D-1, power D-2 and power D-3) or at least simultaneously with other powers.

Accordingly, the power sequencing drive unit 380 in the device power drive unit 360 receives a power E from the main power supply unit 310, but does not supply any power to the device_D 350 until the power sequencing drive unit 380 can generate an output voltage of a specified level. If the power sequencing drive unit 380 reaches a state that it can generate the output voltage of the specified level, it supplies the power D to the device_D 350 as the main power. Then, the power sequencing drive unit 380 transfers its output voltage to the power control unit 370 in order to supply other powers (i.e., power D-1, power D-2 and power D-3) to the device_D 350. Preferably, the power sequencing drive unit 380 may be implemented using regulator ICs or step-down regulator ICs. The step-down regulator IC is an IC that can obtain desired output voltages by receiving a voltage of a specified range.

The power control unit 370, in order to convert the voltage received from the power sequencing drive unit 380 into the power D-1, power D-2 and power D-3, comprises the corresponding number of converters. Preferably, the converters may each be implemented using a regulator IC.

Accordingly, in consideration of the time required for converting the voltage through the power control unit 370, the power D may be first applied to the device_D 350, and then other powers (i.e., power D-1, power D-2 and power D-3) may be applied to the device_D almost simultaneously. Consequently, since the power D is not applied to the device_D 350 later than other powers (i.e., power D-1, power D-2 and power D-3), the device_D 350 can be prevented from performing an abnormal operation due to the violation of the power sequence.

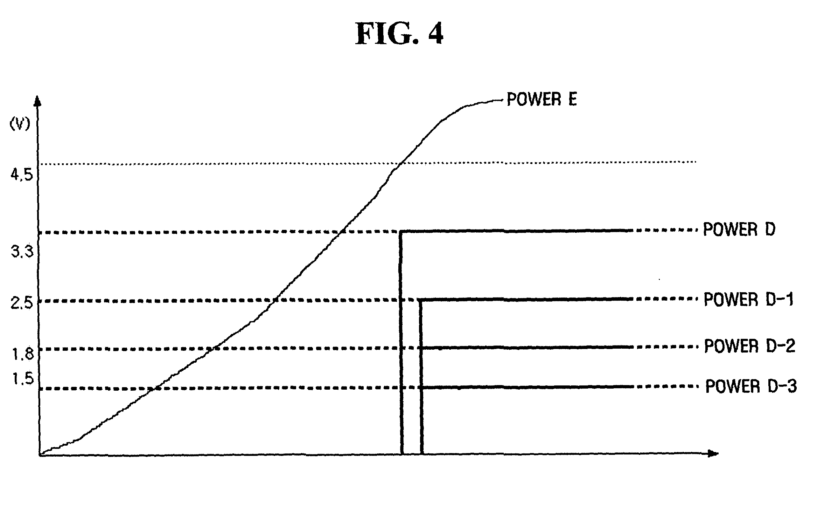

Figure 4 is a graph illustrating time periods required for applying powers to the device 350 of Figure 3 according to an embodiment of the present invention. Figure 4 shows that the power D is first applied to the device_D 350, and then other powers (i.e., power D-1, power D-2 and power D-3) are substantially simultaneously applied to the device_D 350. The time periods for which the power D-1, power D-2 and power D-3 are applied to the device_D 350 may be slightly different from one another.

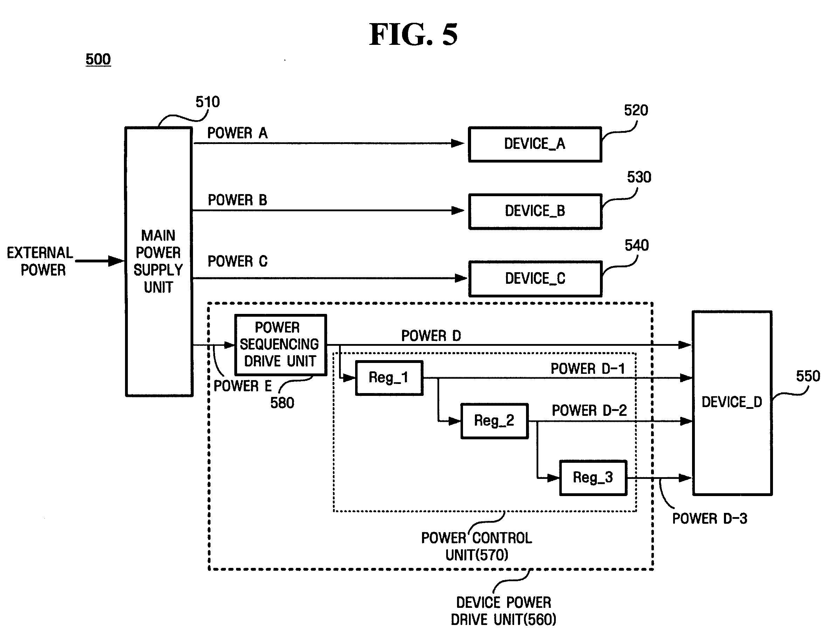

Figure 5 is a block diagram illustrating the construction of a system 500 for performing a power sequencing according to another embodiment of the present invention.

A main power supply unit 510, device_A 520, device_B 530, device_C 540 and device_D 550 as illustrated in Figure 5 correspond to the main power supply unit 310, device_A 320, device_B 330, device_C 340 and device_D 350 illustrated in Figure 3, respectively. Also, a device power drive unit 560 and a power sequencing drive unit 580 as illustrated in Figure 5 correspond to the device power drive unit 360 and the power sequencing drive unit 380 as illustrated in Figure 3, respectively. However, a plurality of converters constituting a power control unit 570 as illustrated in Figure 5 are constructed in a different manner than those constituting the power control unit 370 illustrated in Figure 3.

A 'Reg_1' converter provided in the power control unit 570 illustrated in Figure 5 receives the power D from the power sequencing drive unit 580, and outputs the power D-1. A 'Reg_2' converter receives the power D-1 from the 'Reg_1' converter, and outputs the power D-2. A 'Reg_3' converter receives the power D-2 from the 'Reg_2' converter, and outputs the power D-3. In this circuit construction, the power D is first applied to the device_D 550, and then the power D-1, power D-2 and power D-3 are applied to the device_D 550 in order. Consequently, a time delay occurs in applying the powers to the device_D 550. If the device that operates by a plurality of powers having different levels has a power sequence in which the power having the largest level is first applied to the device and the power having the smallest level is applied to the device last, the structure of the power control unit 570 as illustrated in Figure 5 can be used.

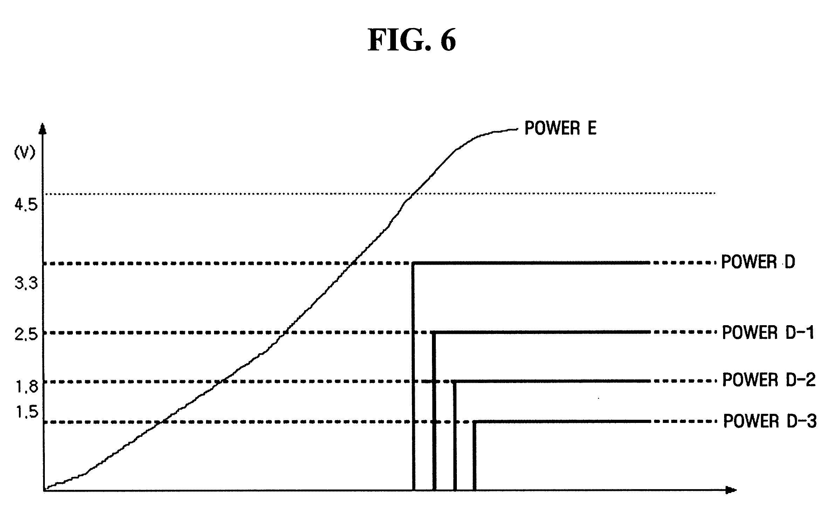

Figure 6 is a graph illustrating time periods required for applying powers to the device according to the construction of the power control unit 570 as illustrated in Figure 5.

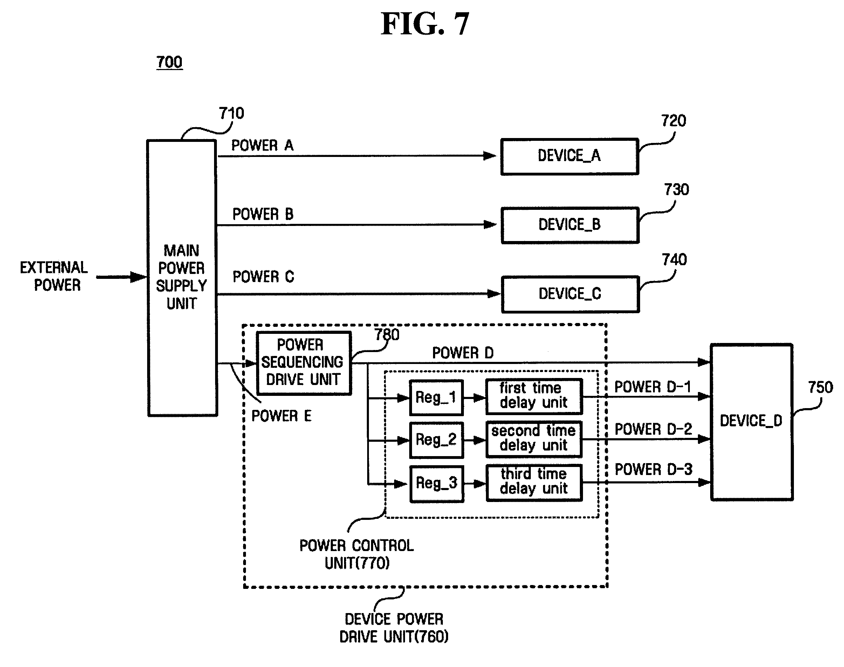

Figure 7 is a block diagram illustrating the construction of a system for performing a power sequencing according to still another embodiment of the present invention.

A main power supply unit 710, device_A 720, device_B 730, device_C 740 and device_D 750 as illustrated in Figure 7 correspond to the main power supply unit 310, device_A 320, device_B 330, device_C 340 and device_D 350 as illustrated in Figure 3, respectively. Also, a device power drive unit 760 and a power sequencing drive unit 780 as illustrated in Figure 7 correspond to the device power drive unit 360 and the power sequencing drive unit 380 as illustrated in Figure 3, respectively. However, in this embodiment as illustrated in Figure 7, time delay units are added to the respective converters that constitute the power control unit 370 as illustrated in Figure 3. The time delay unit is for adjusting the time delays of the respective power supplies, and may be implemented using a circuit element for performing a time delay function. Preferably, the time delay units are located at output terminals of the respective converters that constitute the power control unit 770.

In this case, it is assumed that the levels of the powers to be applied to the device_D 750 are set as the application of power D before power D-1, power D-2, or power D-3, and the power D-1, power D-2 and power D-3 have respective time delays based on the power D so that the power D is first applied to the device and then the power D-2, power D-1 and power D-3 are applied to the device in order. Specifically, the power D-1, power D-2 and power D-3 have the time delays of T₁, T₂ and T₃ based on the power D.

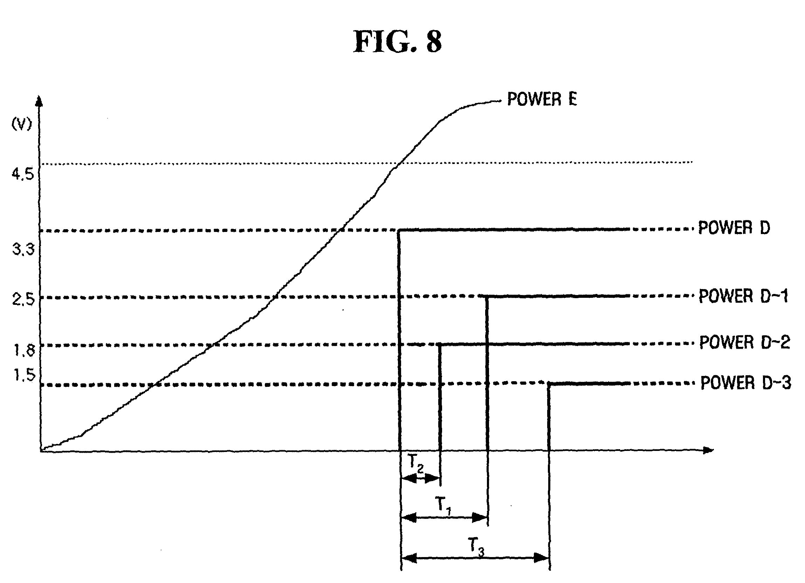

As illustrated in Figure 7, the Reg_1 converter converts the power D inputted to the power control unit 770 into the power D-1, and the power D-1 is supplied to the device_D 750 after the time delay of T₁ occurs. The power D-2 and power D-3 may be supplied to the device_D 750 in the same manner. Figure 8 is a graph illustrating time periods required for applying powers to the device according to the embodiment as illustrated in Fig. 7.

Meanwhile, by adding the time delay units as illustrated in Figure 7 to the power control unit 570 as illustrated in Figure 5, a result that satisfies the power sequence of the device_D 550 may be obtained.

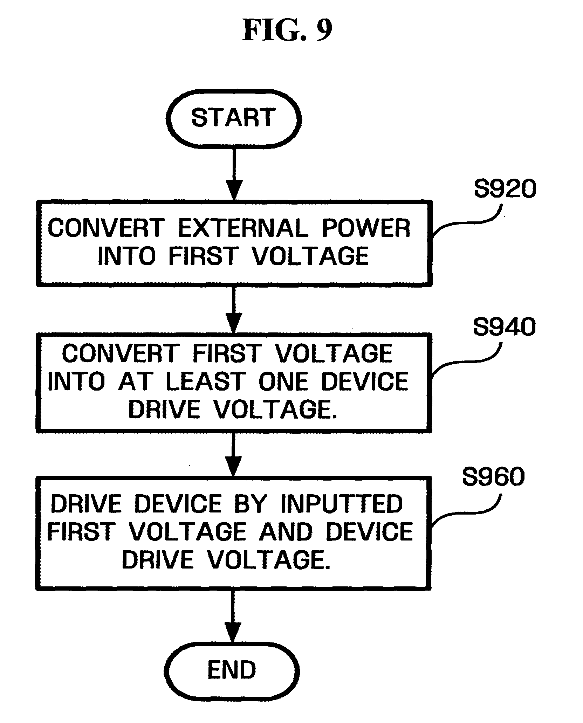

Figure 9 is a flowchart illustrating a method for performing a power sequencing according to an embodiment of the present invention.

Referring to Figure 9, if the external power is supplied to the system, it is converted into a first voltage for operating devices that constitute the system (step S920). Then, the first voltage is converted into at least one device drive voltage for operating the devices (step S940). The devices receive the first voltage and the device drive voltages and start to operate (step S960). In this case, the circuit for converting the first voltage into the device drive voltages may be the power control unit 370 of Figure 3, or power control unit 570 of Figure 5 or the power control unit 770 of Figure 7.

As described above, embodiments of the present invention can provide a circuit that satisfies the power sequence of devices operating by a plurality of powers having different levels, and thus the devices can stably operate with the product reliability improved.

Although preferred embodiments of the present invention have been described for illustrative purposes, those skilled in the art will appreciate that various modifications, additions and substitutions are possible, without departing from the scope and spirit of the invention as disclosed in the accompanying claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A system for performing a power sequencing, comprising:
a main power supply unit (310) for receiving a power from an external power source;
a power sequencing drive unit (380) for receiving an output voltage (POWER E) of the main power supply and outputting a preset first voltage (POWER D);
a power control unit (370) for receiving the first voltage (POWER D) and outputting at least one different device drive voltage (POWER D-1); and
a device (DEVICE-D) for receiving the first voltage (POWER D) and the device drive voltage (POWER D-1) and operating by the received voltages.

2. The system as claimed in claim 1, wherein the power sequencing drive unit (380) comprises a step-down regulator IC.

3. The system as claimed in claim 1 or 2, wherein the power control unit (370) comprises at least one DC-to-DC converter operable to receive the first voltage (POWER D) and output the device drive voltage (POWER D-1).

4. The system as claimed in claim 3, wherein the power control unit (370) comprises a plurality of DC-to-DC converters and the DC-to-DC converters are arranged to receive the first voltage (POWER D) simultaneously.

5. The system as claimed in claim 4, wherein the power control unit (370) further comprises a time delay unit for delaying a transfer of the device drive voltages outputted from output terminals of the DC-to-DC converters.

6. The system as claimed in any of claims 1-3, wherein the power control unit (570) comprises:
a first DC-to-DC converter (Reg_1) for receiving the first voltage (POWER D) and outputting a first device drive voltage (POWER D-1); and
a second DC-to-DC converter (Reg_2) for receiving the first device drive voltage and outputting a second device drive voltage;
wherein the first voltage (POWER D), the first device drive voltage (POWER D-1) and the second device drive voltage (POWER D-2) are outputto the device.

7. The system as claimed in claim 6, wherein the power control unit (570) further comprises a time delay unit for delaying a transfer of the device drive voltages outputted from output terminals of the DC-to-DC converters.

8. The system as claimed in claim 7, wherein the time delay unit is operable to delay the device drive voltages by different time periods.

9. The system as claimed in any of claims 3-8, wherein the DC-to-DC converter comprises a regulator IC.

10. The system as claimed in any preceding claim, wherein the device (DEVICE _D) is arranged to receive the first voltage (POWER D) prior to the device drive voltage (POWER D-1), and to operate accordingly.

11. The system as claimed in any of claims 1-9, wherein the device (DEVICE_D) is arranged to receive the first voltage (POWER D) and the device drive voltage (POWER D-1) in a selected order, and to operate accordingly.

12. A method for performing a power sequencing, comprising the steps of:
(a) receiving a power from an external power source;
(b) converting (S920) the power into a first voltage (POWER D-1) for operating devices that constitute a system;
(c) converting (S940) the first voltage (POWER D) into at least one device drive voltage (POWER D-1); and
(d) outputting (S960) the first voltage (POWER D) and the device drive voltage (POWER D-1) to the devices.

13. The method as claimed in claim12, wherein the step (b) comprises the step of converting the first voltage (POWER D) using a step-down regulator IC.

14. The method as claimed in claim 12 or 13, wherein the step (c) comprises the step of converting the first voltage (POWER D) into at least one device drive voltage (POWER D-1) using at least one DC-to-DC converter.

15. The method as claimed in claim 14, wherein the DC-to-DC converters receive the first voltage simultaneously.

16. The method as claimed in claim 15, wherein the step (a) comprises operating a time delay unit for delaying a transfer of the device drive voltages outputted from output terminals of the DC-to-DC converters.

17. The method as claimed in claim 12, wherein the step (c) comprises the steps of:
receiving and converting the first voltage (POWER D) into a first device drive voltage (POWER D-1); and
receiving and converting the first device drive voltage (POWER D-1) into a second device drive voltage (POWER D-2); and
wherein the step (d) comprises the step of outputting the first voltage (POWER D), the first device drive voltage (POWER D-1) and the second device drive voltage (POWER D-2) to the device.

18. The method as claimed in claim 17, wherein a time delay unit delays a transfer of the first and second device drive voltages outputted from output terminals of the DC-to-DC converters.

19. The method as claimed in claim 18, wherein the time delay unit delays the transfer of the first and second converters by different time periods.

20. The method as claimed in any of claims 14-19, wherein the DC-to-DC converter comprises a regulator IC.

21. The method as claimed in any of claims 12-20, further comprising the step of (e) the device receiving the first voltage (POWER D) prior to the device drive voltage (POWER D-1), and operating accordingly.

22. The method as claimed in any of claims 12-20, further comprising the step of (e) the device receiving the first voltage and the device drive voltages (POWER D-1) in order, and operating accordingly.
